# EUROPÄISCHE PATENTSCHRIFT

(11) **EP 1 474 258 B1**
(45) Veröffentlichungstag und Bekanntmachung des Hinweises auf die Patenterteilung: **12.04.2006**
(21) Anmeldenummer: 02791841.6
(22) Anmeldetag: 18.12.2002
(51) Int. Cl.: B23D 77/00

(54) **MASCHINENREIBAHLE**
MACHINE REAMER
ALESOIR MACHINE

(30) Priorität: 15.02.2002 DE 10206610; 29.05.2002 DE 10224228
(43) Veröffentlichungstag der Anmeldung: 10.11.2004
(73) Patentinhaber: Dihart AG, CH-4657 Dulliken (CH)
(72) Erfinder: BÜTTIKER, Otto, CH-4617 Gunzgen (CH); EIGENMANN, Roman, CH-4665 Oftringen (CH); KRUSZYNSKI, Jacek, 70190 Stuttgart (DE)
(74) Vertreter: Wolf, Eckhard
(86) Internationale Anmeldenummer: PCT/EP2002/014430
(87) Internationale Veröffentlichungsnummer: WO 2003/068439

(56) Entgegenhaltungen:
- EP-A- 0 734 803
- DE-U- 29 912 751
- US-A- 2 995 963
- US-A- 3 320 833

## Beschreibung

Die Erfindung betrifft eine Maschinenreibahle mit einem schaftartigen Grundkörper und einem stirnseitig über den Grundkörper axial überstehenden Reibkopf, der als einstückige Wechselschneidplatte ausgebildet ist, die mit einem axial überstehenden Ansatz in einen stimseitigen Plattensitz des Grundkörpers einführbar und dort mittels eines durch den Grundkörper achszentral hindurchgeführten Zugankers einspannbar ist.

Maschinenreibahlen dieser Art werden zur Feinbearbeitung zylindrischer Bohrungen mit dem Ziel hoher Maß- und Formgenauigkeit eingesetzt. Eine wichtige Eigenschaft einer Maschinenreibahle ist die Koaxialität des Reibkopfes in Bezug auf die Drehachse. Bei einer bekannten Maschinenreibahle dieser Art (WO 01/64381) sorgt der mit einem konischen Ansatz in einem komplementären stirnseitigen Plattensitz des Grundkörpers mittels eines Zugankers einspannbare Reibkopf für die notwendige Koaxialität. Es hat sich allerdings gezeigt, dass vor allem bei kleinen Baugrößen eine Drehmitnahme über einen konischen Ansatz nicht ohne weiteres gewährleistet ist. Für bestimmte Anwendungen ist es außerdem wichtig, dass der Zuganker in Umfangsrichtung bezüglich der Schneiden des Schneidkopfs exakt positioniert ist.

Ausgehend hiervon liegt der Erfindung die Aufgabe zugrunde, die bekannte Maschinenreibahle dahingehend zu verbessern, dass eine gute Drehmitnahme gewährleistet ist und dass der Zuganker in Bezug auf den Reibkopf in Umfangsrichtung exakt positionierbar ist.

Zur Lösung dieser Aufgabe wird die im Patentanspruch 1 bzw. 6 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung besteht vor allem darin, dass der Zuganker eine durch eine achszentrale Mehrkantöffnung der Wechselschneidplatte hindurchgreifende komplementäre Mehrkantpartie aufweist. Eine weitere Verbesserung in dieser Hinsicht wird dadurch erzielt, dass auch der Grundkörper zumindest in der Nähe seines Plattensitzes eine zentrale Mehrkantöffnung aufweist, durch die eine komplementäre Mehrkantpartie des Zugankers axial hindurchgreift. Vorteilhafterweise schließen die beiden Mehrkantpartien des Zugankers unmittelbar aneinander an und durchdringen dabei die zwischen der Wechselschneidplatte und dem Grundkörper im Bereich des Plattensitzes befindliche Trennstelle in axialer Richtung.

Zweckmäßig weist der Zuganker einen gegen eine Stirnseite der Wechselschneidplatte anliegenden Kopf auf, an den sich die Mehrkantpartien in axialer Richtung anschließen.

Gemäß Anspruch 6 liegt der Zugankerkopf mit einer konischen Spannfläche gegen eine komplementäre Innenkonuspartie an der Stirnseite der Wechselschneidplatte an. Zweckmäßig ist der Zugankerkopf so bemessen, dass er im eingespannten Zustand in der Innenkonuspartie versenkt angeordnet ist. Mit dieser Maßnahme wird erreicht, dass auch Sackbohrungen vollständig bis zu ihrem Boden hin ausgerieben werden können.

Eine weitere vorteilhafte Ausgestaltung der Erfindung sieht vor, dass der Zuganker eine mit einem Kühlschmiermittel beaufschlagbare, im Bereich des Zugankerkopfs in zu den Schneiden der Wechselschneidplatte führende Radialkanäle mündende Axialbohrung aufweist. Die Radialkanäle sind dabei bezüglich der Mehrkantanordnung im Zuganker und in der Wechselschneidplatte so angeordnet, dass sie austrittsseitig die konische Spannfläche durchdringen und dort jeweils in einen zugehörigen, vor den Schneiden der Wechselschneidplatte befindlichen Freiraum münden. Die erfindungsgemäße Kühlkanalführung mit einem durchgehenden Kühlkanal bis unmittelbar auf die Höhe der axialen Schneidpositionen ermöglicht eine der Zerspanung voreilende Benetzung der Bohrungswand. Somit ist auch bei höchsten Schnittgeschwindigkeiten stets eine ausreichende Schmierung des Werkzeugs gewährleistet. Von besonderer Bedeutung ist dies bei der Minimalmengenschmierung, bei welcher ein Öl-Luft-Gemisch als Kühlschmiermittel verwendet wird.

Eine weitere vorteilhafte Ausgestaltung der Erfindung sieht vor, dass der Grundkörper an seinem dem Plattensitz abgewandten Ende eine achszentrale Ausnehmung aufweist, in der eine auf ein Gewinde des Zugankers aufdrehbare Zugmutter angeordnet ist. Die Zugmutter weist ein Innengewinde auf, das auf ein Außengewinde des Zugankers aufdrehbar ist. Die Zugmutter ist dabei verdrehbar und axial unverschiebbar in der Ausnehmung angeordnet. Sie wird zweckmäßig durch einen Sprengring in der Ausnehmung gehalten.

Gemäß einer bevorzugten Ausgestaltung der Erfindung weist die Zugmutter eine an einer ringförmigen Begrenzungsfläche der achszentralen Ausnehmung axial abstützbare Kopfpartie und eine durch eine Axialbohrung des Grundkörpers hindurchgreifende Schaftpartie auf, wobei die Schaftpartie an ihrem freien Ende das auf das Gewinde des Zugankers aufdrehbare Muttergewinde trägt. Mit diesen Maßnahmen wird erreicht, dass das Gewinde des Zugankers unmittelbar hinter der Mehrkantpartie angeordnet und der Zuganker dadurch erheblich verkürzt werden kann. Die vorzugsweise als Hohlschaft ausgebildete Schaftpartie der Zugmutter weist einen größeren Durchmesser als der Zuganker auf und kann daher bei gegebener Steifigkeit länger als dieser ausgebildet werden. Weiter kann im Inneren des Hohlschafts ein größer bemessener Kühlmittelkanal untergebracht werden, der mit der Axialbohrung im Zuganker kommuniziert.

Die Verspannung des Zugankers erfolgt durch Anziehen der Zugmutter mit Hilfe eines Schraubwerkzeugs. Zu diesem Zweck weist die Zugmutter eine axial von außen zugängliche Mehrkantöffnung für den Eingriff des Schraubwerkzeugs auf. Wenn die Mehrkantöffnung der Zugmutter maßlich der Mehrkantöffnung der Wechselschneidplatte entspricht, ist es möglich, die Wechselschneidplatte beim Auswechseln mit dem gleichen Schraubwerkzeug aus ihrer reibschlüssigen Verspannung im Grundkörper zu lösen, nachdem zuvor der Zuganker entfernt worden ist. Die Mehrkantöffnung ist zu diesem Zweck vorzugsweise als Innensechskant für den Eingriff eines Inbusschlüssels ausgebildet.

Mit den erfindungsgemäßen Maßnahmen wird erreicht, dass der Zuganker und die Zugmutter schwimmend im Grundkörper und in der Wechselschneidplatte positioniert sind. Dadurch erhält man beim Festziehen der Zugmutter eine rein axiale Verspannung des Systems, mit dem Ergebnis, dass die Vibrationsneigung reduziert wird und dadurch höhere Schnittgeschwindigkeiten erzielt werden können.

Im folgenden wird die Erfindung anhand der in der Zeichnung in schematischer Weise dargestellten Ausführungsbeispiele näher erläutert. Es zeigen
- Fig. 1: eine schaubildliche geschnittene Darstellung einer Maschinenreibahle mit Wechselschneidplatte;
- Fig. 2a: eine Seitenansicht der Maschinenreibahle nach Fig. 1 in Explosionsdarstellung;
- Fig. 2b: eine Draufsicht auf die Wechselschneidplatte der Maschinenreibahle nach Fig. 1;
- Fig. 3: eine schaubildliche geschnittene Darstellung eines abgewandelten Ausführungsbeispiels einer Maschinenreibahle mit Wechselschneidplatte;
- Fig. 4a: eine Seitenansicht der Maschinenreibahle nach Fig. 3 in Explosionsdarstellung;
- Fig. 4b: eine Draufsicht auf die Wechselschneidplatte der Maschinenreibahle nach Fig. 3.

Die in der Zeichnung dargestellten Maschinenreibahlen weisen einen als Schaft ausgebildeten Grundkörper 10 und einen stimseitig über den Grundkörper axial überstehenden Reibkopf 12 auf. Der Reibkopf 12 ist als einstückige Wechselschneidplatte ausgebildet, die in einen stimseitigen Plattensitz 14 des Grundkörpers 10 unter axialer Verspannung spielfrei und koaxial selbstzentrierend einspannbar ist. Die aus einem gesinterten Schneidstoff, insbesondere aus Hartmetall bestehende Wechselschneidplatte 12 weist mehrere in Umfangsrichtung im Abstand voneinander angeordnete Schneidzähne 16 auf, deren Zahnteilung ungleich ist. Sie weist außerdem einen über eine Planfläche 22 axial überstehenden konischen Ansatz 24 auf, mit dem sie im Plattensitz 14 spielfrei verankert werden kann.

Die Wechselschneidplatte 12 ist mittels eines durch eine Axialbohrung 42 des Grundkörpers 10 hindurchgreifenden Zugankers 44 im Plattensitz 14 einspannbar. Der Zuganker 44 liegt dazu mit der zur Längsachse des Grundkörpers koaxialen Konusfläche 45 seines Kopfs 46 gegen eine komplementäre Stirnfläche 47 der Wechselschneidplatte 12 an. An seinem dem Kopf 46 abgewandten Ende weist der Zuganker 44 ein Außengewinde 48 auf, auf das die in einer Ausnehmung 49 des Grundkörpers 10 drehbar und axial unverschiebbar angeordnete Zugmutter 50 mit ihrem Innengewinde aufdrehbar ist. Die Verspannung erfolgt durch Anziehen der Zugmutter 50 mit Hilfe eines in den Innensechskant 52 eingreifenden Schraubwerkzeugs. Wenn der Innensechskant 52 maßlich der Mehrkantöffnung 30 in der Wechselschneidplatte 12 entspricht, kann dasselbe Schraubwerkzeug auch zum Lösen der Wechselschneidplatte aus ihrer Verspannung mit dem Grundkörper 10 verwendet werden. Dazu muss zunächst der Zuganker 44 entfernt werden, so dass die Mehrkantöffnung 30 für das Schraubwerkzeug zugänglich wird. Die Zugmutter 50 ist in der Ausnehmung 49 mit Hilfe eines Sprengrings 51 axial unverschiebbar gehalten.

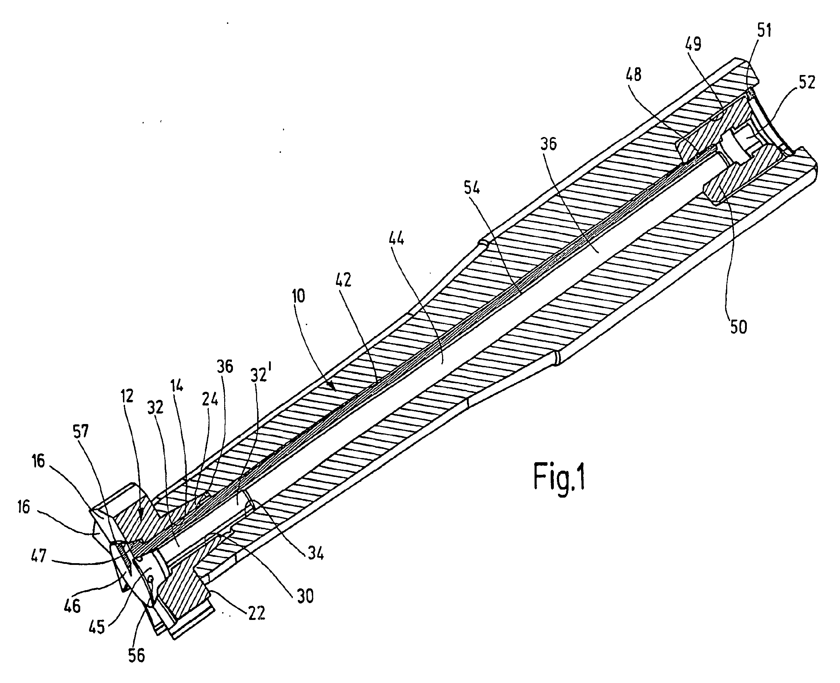

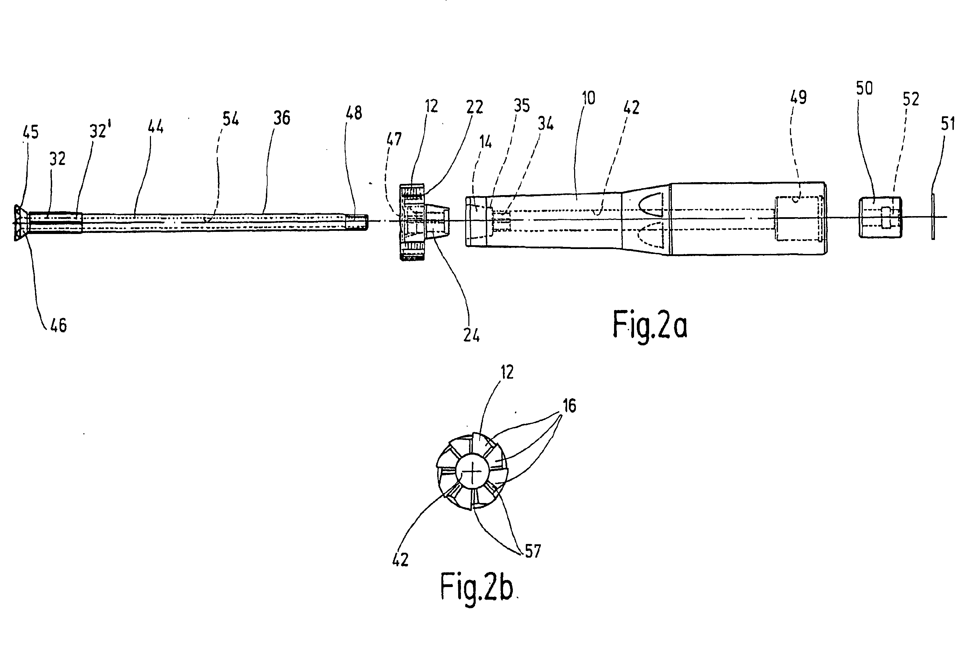

Bei dem Ausführungsbeispiel nach Fig. 1 und 2 ist ein relativ langer und schlanker Zuganker 44 vorgesehen, der mit seinem Außengewinde 48 bis in den Bereich der Ausnehmung 49 des Grundkörpers 10 reicht.

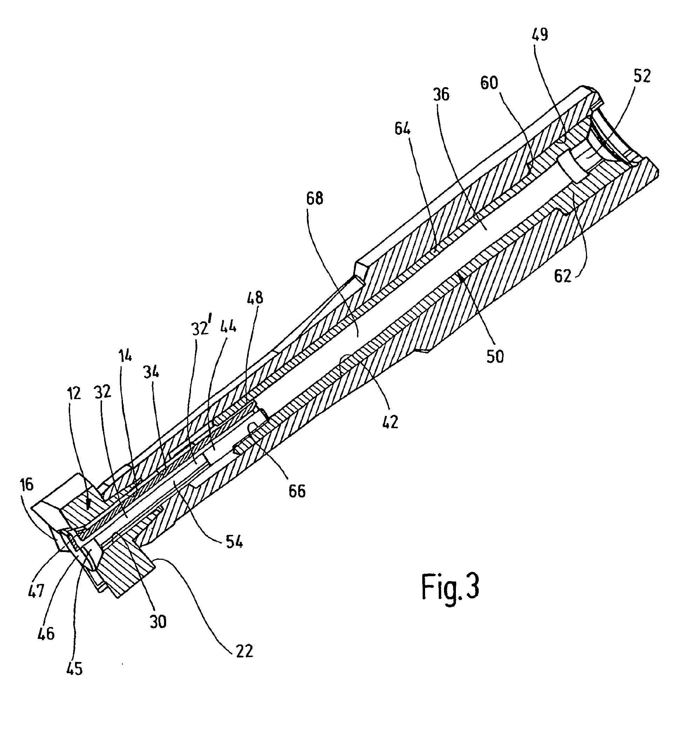

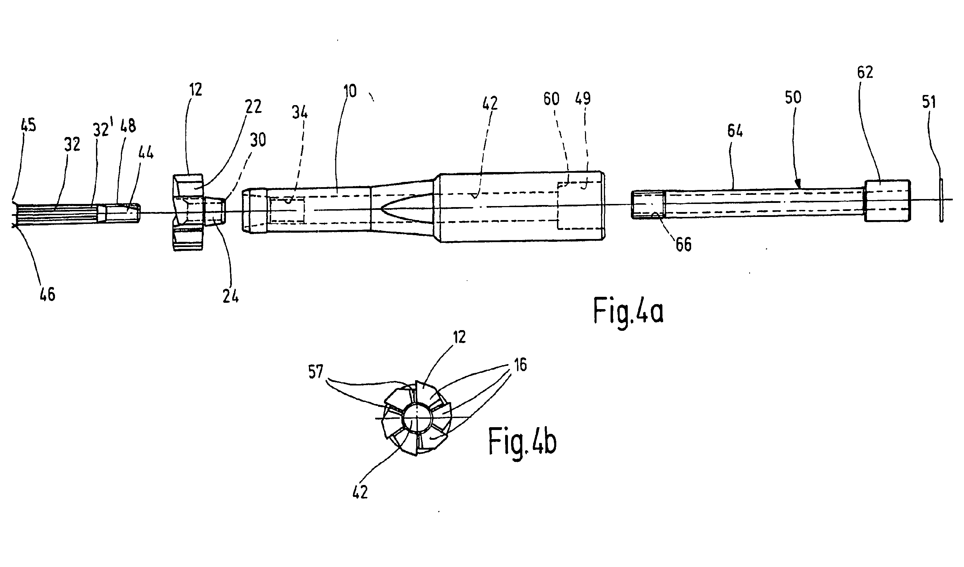

Das in Fig. 3 und 4 gezeigte Ausführungsbeispiel unterscheidet sich von dem Ausführungsbeispiel nach Fig. 1 und 2 dadurch, dass die Zugmutter 50 eine an einer ringförmigen Begrenzungsfläche 60 der achszentralen Ausnehmung 49 achszentral abstützbare Kopfpartie 62 und eine durch die Axialbohrung 42 des Grundkörpers 10 hindurchgreifende Schaftpartie 64 aufweist. Die Schaftpartie 64 weist an ihrem freien Ende das auf das Gewinde 48 des Zugankers 44 aufdrehbare Muttergewinde 66 auf. Das Außengewinde 48 des Zugankers kann damit unmittelbar hinter der Mehrkantpartie 32 angeordnet werden. Der schlanke Zuganker 44 ist somit wesentlich kürzer als bei dem Ausführungsbeispiel nach Fig. 1 und 2. Insgesamt erhält man dadurch eine günstigere Konstellation hinsichtlich Steifigkeit und Herstellungskosten.

Der Zuganker 44 und die Zugmutter 50 sind mit einer Axialbohrung 54 versehen, die im Bereich des Zugankerkopfes 46 in Radialkanäle 56 mündet.

Über die Axialbohrung 54 und die Radialkanäle 56 erfolgt die Zufuhr eines Kühlschmiermittels zu den Schneiden 16 der Wechselschneidplatte 12. Bei dem in Fig. 3 und 4 gezeigten Ausführungsbeispiel kommuniziert die Axialbohrung 54 mit dem Inneren 68 des Hohlschafts 64. Da der Innendurchmesser des Hohlschafts größer als der Bohrungsdurchmesser 54 im Zuganker ist, tritt bei dem Ausführungsbeispiel nach Fig. 3 und 4 ein geringerer Druckabfall bei der Kühlschmiermittelzufuhr auf.

Um die Austrittsstellen der Radialkanäle 56 bezüglich der Schneiden 16 im Bereich der Freiräume 57 der Wechselschneidplatte 12 exakt positionieren zu können, weist der Zuganker 44 eine durch eine achszentrale Mehrkantöffnung 30 der Wechselschneidplatte 12 hindurchgreifende komplementäre Mehrkantpartie 32 auf. Mit dieser Maßnahme wird außerdem eine Verbesserung der Drehmitnahme der Wechselschneidplatte 12 mit dem Grundkörper 10 über den Zuganker 44 erzielt. Eine weitere Verbesserung in dieser Hinsicht wird dadurch erreicht, dass auch der Grundkörper zumindest in der Nähe seines Plattensitzes 14 eine zentrale Mehrkantöffnung 34 aufweist, in die eine komplementäre Mehrkantpartie 32' des Zugankers axial eingreift. Die beiden Mehrkantpartien 32,32' des Zugankers schließen unmittelbar aneinander an und durchdringen die zwischen der Wechselschneidplatte 12 und dem Grundkörper 10 im Bereich des Plattensitzes 14 befindliche Trennstelle 35 in axialer Richtung. Im weiteren Verlauf weist der Zuganker 44 eine zylindrische Partie 36 auf, an deren Ende sich das Außengewinde 48 anschließt.

Zusammenfassend ist folgendes festzuhalten: Die Erfindung bezieht sich auf eine Maschinenreibahle mit einem schaftartigen Grundkörper 10 und einem stirnseitig über den Grundkörper axial überstehenden, als einstückige Wechselschneidplatte 12 ausgebildeten Reibkopf. Die Wechselschneidplatte ist mit einem axial überstehenden, vorzugsweise konischen Ansatz 24 in einen stimseitigen Plattensitz 14 des Grundkörpers 10 einführbar und dort mittels eines durch den Grundkörper 10 achszentral hindurchgreifenden Zugankers 44 einspannbar. Zur Verbesserung der Drehmitnahme zwischen Grundkörper 10 und Wechselschneidplatte 12 weist die Wechselschneidplatte 12 eine achszentrale Mehrkantöffnung 30 auf, durch die der Zuganker mit einer komplementären Mehrkantpartie 32 hindurchgreift.

## Patentansprüche

1. Maschinenreibahle mit einem schaftartigen Grundkörper (10) und einem stimseitig über den Grundkörper (10) axial überstehenden Reibkopf, der als einstückige Wechselschneidplatte (12) ausgebildet ist, die mit einem axial überstehenden Ansatz (24) in einen stimseitigen Plattensitz (14) des Grundkörpers (10) einführbar und dort mittels eines durch den Grundkörper (10) achszentral hindurchgreifenden Zugankers (44) einspannbar ist, wobei der Zuganker (44) einen gegen eine Stirnseite der Wechselschneidplatte (12) anliegenden Kopf (46) aufweist, **dadurch gekennzeichnet, dass** der Zuganker (44) eine durch eine achszentrale Mehrkantöffnung (30) der Wechselschneidplatte (12) hindurchgreifende komplementäre Mehrkantpartie (32) aufweist.

2. Maschinenreibahle nach Anspruch 1, **dadurch gekennzeichnet, dass** der Grundkörper (10) zumindest in der Nähe seines Plattensitzes (14) eine zentrale Mehrkantöffnung (34) aufweist, durch den eine komplementäre Mehrkantpartie (32') des Zugankers axial hindurchgreift.

3. Maschinenreibahle nach Anspruch 2, **dadurch gekennzeichnet, dass** die beiden Mehrkantpartien (32,32') des Zugankers unmittelbar aneinander anschließen und die zwischen der Wechselschneidplatte (12) und dem Grundkörper (10) im Bereich des Plattensitzes (14) befindliche Trennstelle axial durchdringen.

4. Maschinenreibahle nach Anspruch 2 oder 3, **dadurch gekennzeichnet, dass** die Mehrkantpartien (32,32') unmittelbar an den Kopf (46) des Zugankers (44) anschließen.

5. Maschinenreibahle nach einem der Ansprüche 1 bis 4, **dadurch gekennzeichnet, dass** der Kopf (46) des Zugankers (44) mit einer konischen Spannfläche (45) gegen eine komplementäre Innenkonuspartie (47) an der Stirnseite der Wechselschneidplatte (12) anliegt.

6. Maschinen reibahle mit einem schaftartigen Grundkörper (10) und einem stirnseitig über den Grundkörper (10) axial überstehenden Reibkopf, der als einstückige Wechselschneidplatte (12) ausgebildet ist, die mit einem axial überstehenden Ansatz (24) in einen stimseitigen Plattensitz (14) des Grundkörpers (10) einführbar und dort mittels eines durch den Grundkörper (10) achszentral hindurchgreifenden Zugankers (44) einspannbar ist, wobei der Zuganker (44) einen gegen eine Stirnseite der Wechselschneidplatte (12) anliegenden Kopf (46) aufweist, **dadurch gekennzeichnet, dass** der Kopf (46) des Zugankers (44) mit einer konischen Spannfläche (45) gegen eine komplementäre Innenkonuspartie (47) an der Stirnseite der Wechselschneidplatte (12) anliegt.

7. Maschinenreibahle nach Anspruch 5 oder 6, **dadurch gekennzeichnet, dass** der Kopf (46) des Zugankers (44) in der Innenkonuspartie der Wechselschneidplatte (12) versenkt angeordnet ist.

8. Maschinenreibahle nach einem der Ansprüche 1 bis 7, **dadurch gekennzeichnet, dass** der Zuganker eine mit einem Kühlschmiermittel beaufschlagbare Axialbohrung (54) aufweist, die im Bereich des Zugankerkopfes (46) in zu den Schneiden (16) der Wendeschneidplatte (12) führende Radialkanäle (56) mündet.

9. Maschinenreibahle nach Anspruch 8, **dadurch gekennzeichnet, dass** die Radialkanäle (56) austrittsseitig die Konusfläche (45) des Zugankerkopfes (46) durchdringen und dort jeweils in einen zugehörigen, vor den Schneiden (16) der Wendeschneidplatte (12) befindlichen Freiraum (57) münden.

10. Maschinenreibahle nach einem der Ansprüche 1 bis 9, **dadurch gekennzeichnet, dass** der Grundkörper (10) an seinem dem Plattensitz (14) abgewandten Ende eine achszentrale Ausnehmung (49) aufweist, in der eine auf ein Gewinde (48) des Zugankers (44) aufdrehbare Zugmutter (50) angeordnet ist.

11. Maschinenreibahle nach Anspruch 10, **dadurch gekennzeichnet, dass** die Zugmutter (50) verdrehbar und axial unverschiebbar in der Ausnehmung (49) angeordnet ist.

12. Maschinenreibahle nach Anspruch 10 oder 11, **dadurch gekennzeichnet, dass** die Zugmutter (50) durch einen Sprengring (51) in der Ausnehmung (49) gehalten ist.

13. Maschinenreibahle nach einem der Ansprüche 10 bis 12, **dadurch gekennzeichnet, dass** die Zugmutter eine an einer ringförmigen Begrenzungsfläche (60) der achszentralen Ausnehmung (49) axial abstützbare Kopfpartie (62) und eine durch eine Axialbohrung (42) des Grundkörpers (10) hindurchgreifende Schaftpartie (64) aufweist, wobei die Schaftpartie an ihrem freien Ende das auf das Gewinde (48) des Zugankers (44) aufdrehbare Muttergewinde (66) trägt.

14. Maschinenreibahle nach Anspruch 13, **dadurch gekennzeichnet, dass** die Schaftpartie (64) als Hohlschaft ausgebildet ist und dass der Zuganker (44) eine mit dem Inneren (68) des Hohlschafts kommunizierende Axialbohrung (54) aufweist.

15. Maschinenreibahle nach Anspruch 13 oder 14, **dadurch gekennzeichnet, dass** die Schaftpartie (64) der Zugmutter (50) einen größeren Außendurchmesser und/oder eine größere Länge als der Zuganker (44) aufweist.

16. Maschinenreibahle nach einem der Ansprüche 13 bis 15, **dadurch gekennzeichnet, dass** die Zugmutter (50) eine axial von außen zugängliche, der Mehrkantöffnung (30) der Wechselschneidplatte (12) maßlich entsprechende Mehrkantöffnung (52) für den Eingriff eines Schraubwerkzeugs aufweist.

17. Maschinenreibahle nach Anspruch 16, **dadurch gekennzeichnet, dass** die Mehrkantöffnung (52) als Innensechskant ausgebildet ist.

## Claims

1. A machine reamer comprising a shaft-like base (10) and a reamer head, which axially projects beyond a front of the base (10), and which is designed as a one-piece indexable insert (12), which can be introduced into a front-side insert seat (14) of the base (10) with an axially projecting shoulder (24), and which can be clamped therein by means of a tension rod (44) which extends axis-centrally through the base (10), whereby the tension rod (44) has a head (46) resting against a face of the indexable insert (12), **characterized in that** the tension rod (44) has a complementary polygonal section (32) extending through an axis-central polygonal opening (30) of the indexable insert (12).

2. The machine reamer according to Claim 1, **characterized in that** the base (10) has a central polygonal opening (34) near its insert seat (14), through which polygonal opening extends axially a complementary polygonal section (32') of the tension rod.

3. The machine reamer according to Claim 2, **characterized in that** the two polygonal sections (32, 32') of the tension rod directly follow one another and axially penetrate through a separation point in the area of the insert seat (14) between the indexable insert (12) and the base (10).

4. The machine reamer according to Claim 2 or 3, **characterized in that** the polygonal sections (32, 32') directly follow the head (46) of the tension rod (44).

5. The machine reamer according to one of the Claims 1 to 4, **characterized in that** the head (46) of the tension rod (44) rests with a conical clamping surface (45) against a complementary inner cone portion (47) on the face of the indexable insert (12).

6. The machine reamer comprising a shaft-like base (10) and a reamer head, which axially projects beyond the front of the base (10), and which is designed as a one-piece indexable insert (12), which can be introduced into a front-side insert seat (14) of the base (10) with an axially projecting shoulder (24), and can be clamped therein by means of a tension rod (44), which extends axis-centrally through the base (10), whereby the tension rod (44) has a head (46) resting against a face of the indexable insert (12), **characterized in that** the head (46) of the tension rod (44) rests with a conical clamping surface (45) against a complementary inner cone portion (47) on the face of the indexable insert (12).

7. The machine reamer according to Claim 5 or 6, **characterized in that** the head (46) of the tension rod (44) is arranged sunk in the inner cone portion of the indexable insert (12).

8. The machine reamer according to one of the Claims 1 to 7, **characterized in that** the tension rod has an axial bore (54), which can be loaded with a cooling lubricant, and which ends in the area of the tension rod head (46) in radial channels (56) leading to the blades (16) of the indexable insert (12).

9. The machine reamer according to Claim 8, **characterized in that** the radial channels (56) penetrate on the outlet side through the cone surface (45) of the tension rod head (46), and end there each in an associated free space (57) provided in front of the blades (16) of the indexable insert (12).

10. The machine reamer according to one of the Claims 1 to 9, **characterized in that** the base (10) has an axis-central recess (49) at its end not facing the insert seat (14), in which recess is arranged a tension nut (50), which can be screwed onto a thread (48) of the tension rod (44).

11. The machine reamer according to Claim 10, **characterized in that** the tension nut (50) is arranged rotatably and axially nonmovably in the recess (49).

12. The machine reamer according to Claim 10 or 11, **characterized in that** the tension nut (50) is held in the recess (49) by a snap ring (51).

13. The machine reamer according to one of the Claims 10 to 12, **characterized in that** the tension nut has a head portion (62) axially supportable on an annular boundary surface (60) of the axis-central recess (49) and a shaft portion (64) extending through an axial bore (42) of the base (10), whereby the shaft portion carries at its free end the female thread (66), which can be screwed onto the thread (48) of the tension rod (44).

14. The machine reamer according to Claim 13, **characterized in that** the shaft portion (64) is designed as a hollow shaft, and that the tension rod (44) has an axial bore (54) communicating with the inside (68) of the hollow shaft.

15. The machine reamer according to Claim 13 or 14, **characterized in that** the shaft portion (64) of the tension nut (50) has a larger outside diameter and/or a greater length than the tension rod (44).

16. The machine reamer according to one of the Claims 13 to 15, **characterized in that** the tension nut (50) has a polygonal opening (52) for the engagement by a screwing tool, which polygonal opening is axially accessible from outside, and corresponds with respect to dimensions to the polygonal opening (30) of the indexable insert (12) .

17. The machine reamer according to Claim 16, **characterized in that** the polygonal opening (52) is designed as a hexagonal recess.

## Revendications

1. Alésoir machine avec un corps de base en forme de queue (10) et une tête d'alésage qui dépasse axialement du corps de base (10) du côté frontal et est réalisée sous forme de plaquette de coupe amovible (12) d'un seul tenant qui peut être introduite avec une saillie (24) qui dépasse axialement dans un logement de plaquette (14) du corps de base (10) côté frontal et y être serrée au moyen d'un tirant (44) qui traverse l'axe central du corps de base (10), le tirant (44) comportant une tête (46) en contact avec un côté frontal de la plaquette de coupe amovible (12), **caractérisé en ce que** le tirant (44) comporte une partie polygonale (32) complémentaire qui traverse une ouverture polygonale (30) dans le centre de l'axe de la plaquette de coupe amovible (12).

2. Alésoir machine selon la revendication 1, **caractérisé en ce que** le corps de base (10) comporte au moins à proximité de son logement de plaquette (14) une ouverture polygonale centrale (34) qu'une partie polygonale (32') complémentaire du tirant traverse axialement.

3. Alésoir de machine selon la revendication 2, **caractérisé en ce que** les deux parties polygonales (32, 32') du tirant sont parfaitement adjacentes et pénètrent axialement dans le point de séparation qui se trouve entre la plaquette de coupe amovible (12) et le corps de base (10) dans la zone du logement de plaquette (14).

4. Alésoir de machine selon la revendication 2 ou 3, **caractérisé en ce que** les parties polygonales (32, 32') sont directement adjacentes à la tête (46) du tirant (44).

5. Alésoir de machine selon une des revendications 1 à 4, **caractérisé en ce que** la tête (46) du tirant (44) avec une surface de serrage conique (45) est en contact avec le côté frontal de la plaquette de coupe amovible (12) grâce à une partie conique intérieure (47) complémentaire.

6. Alésoir machine avec un corps de base en forme de queue (10) et une tête d'alésage qui dépasse axialement du corps de base (10) du côté frontal et est réalisée sous forme de plaquette de coupe amovible (12) d'un seul tenant qui peut être introduite avec une saillie (24) qui dépasse axialement dans un logement de plaquette (14) du corps de base (10) côté frontal et y être serrée au moyen d'un tirant (44) qui traverse l'axe central du corps de base (10), le tirant (44) comportant une tête (46) en contact avec un côté frontal de la plaquette amovible (12), **caractérisé en ce que** la tête (46) du tirant (44) avec une surface de serrage conique (45) est en contact avec le côté frontal de la plaquette amovible (12) grâce à une partie conique intérieure (47) complémentaire.

7. Alésoir machine selon la revendication 5 ou 6, **caractérisé en ce que** la tête (46) du tirant (44) est disposée enfoncée dans la partie conique interne de la plaquette de coupe amovible (12).

8. Alésoir machine selon une des revendications 1 à 7, **caractérisé en ce que** le tirant comporte un perçage axial (54) pouvant être rempli de lubrifiant réfrigérant qui aboutit dans la zone de la tête de tirant (46) dans des canaux radiaux (56) qui mènent aux lames (16) de la plaquette de coupe amovible (12).

9. Alésoir machine selon la revendication 8, **caractérisé en ce que** les canaux radiaux (56) traversent côté sortie la surface conique (45) de la tête de tirant (46) et y aboutissent chacun dans un espace libre (57) afférent qui se trouve devant les lames (16) de la plaquette de coupe amovible (12).

10. Alésoir machine selon une des revendications 1 à 9, **caractérisé en ce que** le corps de base (10) comporte à son extrémité opposée par rapport au écrou de tirant (50) pouvant être vissé sur un filetage (48) du tirant (44) est disposé.

11. Alésoir machine selon la revendication 10, **caractérisé en ce que** l'écrou de tirant (50) est disposé dans l'évidement (49) de manière à pouvoir être tourné et à être axialement fixe.

12. Alésoir machine selon la revendication 10 ou 11, **caractérisé en ce que** l'écrou de tirant (50) est maintenu dans l'évidement (49) par un circlips (51).

13. Alésoir machine selon une des revendications 10 à 12, **caractérisé en ce que** l'écrou de tirant comporte une partie de tête (62) pouvant s'appuyer axialement sur une surface de délimitation annulaire (60) de l'évidement de l'axe central (49) et une partie de queue (64) qui traverse un perçage axial (42) du corps de base (10), la partie de queue portant à son extrémité libre le filetage d'écrou (66) qui peut être vissé sur le filetage (48) du tirant (44).

14. Alésoir machine selon la revendication 13, **caractérisé en ce que** la partie de queue (64) est réalisée sous forme de queue creuse et **en ce que** le tirant (44) comporte un perçage axial (54) qui communique avec l'intérieur (68) de la queue creuse.

15. Alésoir machine selon la revendication 13 ou 14, **caractérisé en ce que** la partie de queue (64) de l'écrou de tirant (50) affiche un diamètre extérieur supérieur et/ou une longueur supérieure à ceux du tirant (44).

16. Alésoir machine selon une des revendications 13 à 15, **caractérisé en ce que** l'écrou de tirant (50) comporte une ouverture polygonale (52) axialement accessible de l'extérieur dont les dimensions correspondent à celles de l'ouverture polygonale (30) de la plaquette de coupe amovible (12) pour la mise en prise d'un outil de serrage.

17. Alésoir machine selon la revendication 16, **caractérisé en ce que** l'ouverture polygonale (52) est réalisée sous forme de six pans creux.
